# EUROPÄISCHE PATENTANMELDUNG

(11) **EP 3 130 813 A2**
(43) Veröffentlichungstag der Anmeldung: **15.02.2017**
(21) Anmeldenummer: 16183825.5
(22) Anmeldetag: 11.08.2016
(51) Int. Cl.: F16D 1/08, F16J 15/34

(54) **ANORDNUNG ZUR ÜBERTRAGUNG VON DREHMOMENT**

(30) Priorität: 14.08.2015 DE 102015010470
(71) Anmelder: Carl Freudenberg KG, 69469 Weinheim (DE)
(72) Erfinder: Braun, Uwe, 69469 Weinheim (DE); Simon, Clemens, 82362 Weilheim (DE)

(57) **Zusammenfassung**

Anordnung zur Übertragung von Drehmoment, umfassend einen Innenring (1), einen Außenring (2) und ein Drehmoment-Übertragungselement (3), wobei der Innenring (1) und der Außenring (2) konzentrisch zueinander angeordnet sind, wobei der Außenring (2) den Innenring (1) mit radialem Abstand umschließt und wobei in dem durch den Abstand gebildeten Spalt (4) das Drehmoment-Übertragungselement (3) angeordnet ist. Das Drehmoment-Übertragungselement (3) ist mit dem Innenring (1) oder dem Außenring (2) formschlüssig und in Umfangsrichtung (5) drehfest verbunden und berührt den Außenring (2) oder den Innenring (1) unter radialer Vorspannung reibschlüssig und anliegend.

## Beschreibung

### Technisches Gebiet

Die Erfindung betrifft eine Anordnung zur Übertragung von Drehmoment, umfassend einen Innenring, einen Außenring und ein Drehmoment-Übertragungselement, wobei der Innenring und der Außenring konzentrisch zueinander angeordnet sind, wobei der Außenring den Innenring mit radialem Abstand umschließt und wobei in dem durch den Abstand gebildeten Spalt das Drehmoment-Übertragungselement angeordnet ist.

### Stand der Technik

Eine solche Anordnung zur Übertragung von Drehmoment ist allgemein bekannt und gelangt zum Beispiel in Gleitringdichtungen zur Anwendung. Beispielsweise ist der Außenring einer vorbekannten Anordnung als Gehäuse ausgebildet und besteht aus einem tiefgezogenen Blech. Das Drehmoment-Übertragungselement ist zum Beispiel durch eine aus dem Gehäuse ausgestanzte Lasche gebildet, mit dem Innenring in Eingriff und sorgt dadurch für die Drehmoment-Übertragung auf den Innenring. Nachteilig dabei ist jedoch, dass der Außenring durch die ausgestanzte Lasche eine entsprechende Öffnung aufweist und der Außenring dadurch undicht ist.

Insbesondere bei vorbekannten Gleitringdichtungen kann das Drehmoment-Übertragungselement durch mehrere, gleichmäßig in Umfangsrichtung verteilt angeordnete Stifte gebildet sein, die den als Gehäuse ausgebildeten Außenring mit dem Innenring, der als Gleitelement der Gleitringdichtung ausgebildet ist, drehfest verbinden. Ein solches Drehmoment-Übertragungselement ist in der DE 35 43 160 A1 offenbart. Das vorbekannte Drehmoment-Übertragungselement ist aufwendig und teuer in der Herstellung.

### Darstellung der Erfindung

Der Erfindung liegt die Aufgabe zu Grunde, eine Anordnung zur Übertragung von Drehmoment derart weiterzuentwickeln, dass diese einfach und kostengünstig herstellbar ist und einfach montiert werden kann.

Diese Aufgabe wird erfindungsgemäß mit den Merkmalen der Patentansprüche 1 und 2 gelöst.
Auf vorteilhafte Ausgestaltungen nehmen die darauf rückbezogenen Unteransprüche Bezug.

Die Aufgabe wird dadurch gelöst, dass das Drehmoment-Übertragungselement mit dem Innenring formschlüssig und in Umfangsrichtung drehfest verbunden ist und den Außenring unter radialer Vorspannung reibschlüssig und anliegend berührt.
Eine solche Anordnung ist zum Beispiel in einer Gleitringdichtung gegeben. Der Innenring kann zum Beispiel durch einen Gleitring oder einen Gegenring der Gleitringdichtung gebildet sein, der Außenring durch ein Gehäuse, das mit einem der genannten Ringe durch das Drehmoment-Übertragungselement Drehmoment übertragend und während der bestimmungsgemäßen Verwendung der Gleitringdichtung im Normalfall drehfest verbunden ist.

Um auch die Übertragung höherer Drehmomente sicherzustellen, ist es üblicherweise vorteilhaft, wenn die Reibflächen der reibschlüssigen Verbindung möglichst groß sind, ebenso wie die radiale Vorspannung, mit der sich die Reibflächen anliegend berühren.
Für viele Anwendungsfälle hat es sich deshalb, wie zuvor am Beispiel Gleitringdichtung beschrieben, als vorteilhaft bewährt, wenn der Reibschluss zwischen dem Drehmoment-Übertragungselement und dem Außenring erfolgt.

Außerdem wird die Aufgabe dadurch gelöst, dass das Drehmoment-Übertragungselement mit dem Außenring formschlüssig und in Umfangsrichtung drehfest verbunden ist und den Innenring unter radialer Vorspannung reibschlüssig und anliegend berührt. Hierbei handelt es sich um eine funktionstechnische Umkehr der zuvor beschriebenen ersten Lösung.

Bei der erfindungsgemäßen Anordnung ist von hervorzuhebendem Vorteil, dass der Außenring besonders bevorzugt umfangsseitig in sich geschlossen und deshalb dicht ausgebildet ist. Durchbrechungen und/oder Laschen, die für eine Drehmomentübertragung notwendig wären, bedarf es nicht. Eine solche Anordnung ist deshalb in Gleitringdichtungen besonders vorteilhaft, die flüssige und gasförmige Medien abdichten.

Das Drehmoment-Übertragungselement kann im Wesentlichen hohlzylindrisch ausgebildet sein. Solche holzylindrisch ausgebildeten Bauteile sind einfach und kostengünstig herstellbar. Die Montage ist ebenfalls einfach, weil das Drehmoment-Übertragungselement in den radialen Spalt zwischen Innenring und Außenring eingesetzt wird und dadurch während der bestimmungsgemäßen Verwendung das Drehmoment zwischen Innenring und Außenring überträgt.
Die erfindungsgemäße Anordnung weist einen teilearmen Aufbau auf.

Das Drehmoment-Übertragungselement kann zur Erzeugung der elastischen radialen Vorspannung einen Schlitz in axialer Richtung aufweisen, der sich von einer Stirnseite des Drehmoment-Übertragungselements zur anderen Stirnseite erstreckt. Die Größe der radialen Vorspannung korreliert mit der Größe des zu übertragenden Drehmoments. Durch den axialen Schlitz besteht die Möglichkeit, die radiale Vorspannung des Drehmoment-Übertragungselements an den jeweiligen Anwendungsfall anzupassen. Das ist insbesondere dann sinnvoll, wenn die Anordnung mit einem Überlastschutz versehen sein soll. Um zu verhindern, dass bei Einleitung von Drehmomentspitzen in die Anordnung die formschlüssige Verbindung zum Drehmoment-Übertragungselement durch Scherung beschädigt/zerstört wird, kann die radiale Vorspannung während der Montage der Anordnung derart eingestellt werden, dass bei Überschreitung eines bestimmten Drehmoments das Drehmoment-Übertragungselement bezogen auf den reibschlüssig damit verbundenen Außenring oder Innenring durchrutscht und dadurch eine Beschädigung/Zerstörung der formschlüssigen Verbindung vermieden wird. Erst dann, wenn das Drehmoment unter einen unkritischen Schwellwert sinkt, wird die drehfeste Verbindung zwischen Innenring und Außenring durch Reibschluss wieder hergestellt.
Durch einen solchen Überlastschutz weist die Anordnung gleichbleibend gute Gebrauchseigenschaften während einer langen Gebrauchsdauer auf.

Das Drehmoment-Übertragungselement besteht bevorzugt aus einem metallischen Werkstoff. Weiter bevorzugt besteht dass Drehmoment-Übertragungselement aus einem Federstahl. Hierbei ist von Vorteil, dass ein solches Drehmoment-Übertragungselement kompakte Abmessungen aufweist, deshalb auch für den Einbau in kleine Einbauräume geeignet ist, nur eine vernachlässigbar geringe Relaxation während einer langen Gebrauchsdauer aufweist und dadurch gleichbleibend gute Gebrauchseigenschaften während einer langen Gebrauchsdauer gewährleistet sind. Außerdem sind solche Drehmoment-Übertragungselemente einfach und kostengünstig herstellbar. Zur Herstellung der formschlüssigen Verbindung kann es vorgesehen sein, dass der Innenring oder der Außenring zumindest einen sich in radialer Richtung erstreckenden, rastnasenförmigen Vorsprung aufweist, der drehfest mit zumindest einer kongruent zum Vorsprung ausgebildeten Vertiefung des Drehmoment-Übertragungselements in Eingriff ist.
Der zumindest eine Vorsprung kann einen einstückigen und materialeinheitlichen Bestandteil des Innen- oder Außenrings bilden oder durch ein separates Bauteil gebildet sein, das mit dem Innen-
oder Außenring drehfest verbunden ist.
Die Dimensionierung des rastnasenförmigen Vorsprungs und der Vertiefung, in der der Vorsprung während der bestimmungsgemäßen Verwendung der Anordnung formschlüssig angeordnet ist, ist abhängig von der Größe des zu übertragenden Drehmoments.

Für möglichst kompakte Abmessungen der Anordnung kann es deshalb vorteilhaft sein, dass mehrere Vorsprünge in mehreren Vertiefungen vorgesehen sind, wobei die Vorsprünge und die Vertiefungen gleichmäßig in Umfangsrichtung verteilt angeordnet sind.
Für viele Anwendungen hat es sich bewährt, dass zwei Vorsprünge und zwei entsprechende Vertiefungen vorgesehen sind. Dadurch ergibt sich ein guter Kompromiss zwischen der Größe des maximal übertragbaren Drehmoments, den Abmessungen der Anordnung und dem Aufwand bei deren Herstellung. Durch das Vorsehen von nur zwei Vorsprüngen ist außerdem von Vorteil, dass das Teil, das die nur zwei Vorsprünge aufweist, dadurch kardanisch aufgehängt ist und eine maximale kardanische Beweglichkeit aufweist. Bei Gleitringdichtungen ist das ein entscheidender Vorteil.

Das Drehmoment-Übertragungselement kann auf seiner dem Außenring oder dem Innenring radial zugewandten und den Außenring oder den Innenring berührenden Seite eine erhöhte Oberflächenrauigkeit aufweisen. Eine erhöhte Oberflächenrauigkeit ist dann sinnvoll, wenn die Anordnung in schmierenden Medien betrieben wird. Durch die schmierenden Medien würden auch die Reibflächen von Drehmoment-Übertagungselement und Außenring oder Innenring geschmiert, so dass zwangsläufig die Tendenz besteht, dass der Reibschluss zwischen Drehmoment-Übertragungselement und Außenring oder Innenring beeinträchtigt wird und die Funktion der Anordnung deshalb nicht mehr in zufriedenstellendem Maße gewährleistet ist.
Durch eine Erhöhung der Oberflächenrauigkeit wird bewirkt, dass die Anordnung auch in schmierenden Medien eingesetzt werden kann und trotzdem gut funktioniert, insbesondere die zu übertragenden Drehmomente gut überträgt.

Alternativ oder zusätzlich besteht die Möglichkeit, dass der Außenring oder der Innenring auf seiner dem Drehmoment-Übertragungselement radial zugewandten und das Drehmoment-Übertragungselement berührenden Seite eine erhöhte Oberflächenrauigkeit aufweisen kann. Weisen sowohl die Reibflächen des Drehmoment-Übertragungselements als auch die Reibflächen des Außen- oder Innenrings jeweils erhöhte Oberflächenrauigkeiten auf, ist das zu übertragende Drehmoment maximal.

Die erhöhte Oberflächenrauigkeit kann durch einen separat erzeugten Reibbelag gebildet sein. Der Reibbelag kann zum Beispiel dadurch gebildet sein, dass die einander zugewandten Reibflächen mechanisch aufgeraut sind, zum Beispiel eine Oberflächenprofilierung aufweisen, die durch einen groben Schleifvorgang oder durch Sandstrahlen erzeugt wird. Der separat erzeugte Reibbelag ist dadurch einstückig ineinander übergehend und materialeinheitlich mit den Reibflächen ausgebildet.

Alternativ besteht die Möglichkeit, einen Reibbelag vorzusehen, der als Einzelteil ausgebildet ist und auf die Reibflächen aufgebracht und mit diesen verbunden ist.

Der Innenring kann als Gleit- oder Gegenring einer Gleitringdichtung ausgebildet sein, wobei der Außenring als Gehäuse der Gleitringdichtung ausgebildet ist.
In einem solchen Fall besteht der Innenring häufig aus einem keramischen Sinterwerkstoff.
Besonders vorteilhaft funktioniert die Anordnung in einer Gleitringdichtung. Gleitring oder Gegenring einer Gleitringdichtung bestehen häufig aus einem keramischen Sinterwerkstoff, der spröde ist und deshalb empfindlich auf schlagartige mechanische Belastungen in Umfangsrichtung reagiert. Die Belastungen auf den Innenring, zum Beispiel durch mechanische Schläge, werden durch das Drehmoment-Übertragungselement und dessen reibschlüssige Verbindung zum Außenring auf ein Minimum reduziert. Das Drehmoment-Übertragungselement wirkt bei Einleitung von Drehmomentspitzen dadurch nach Art einer Rutschkupplung dämpfend und materialschonend für den Innenring weil die Drehmomentspitzen durch ein Durchrutschen der reibschlüssigen Verbindung abgebaut werden. Unerwünscht hohe mechanische Belastungen werden dadurch vom Innenring ferngehalten. Einer Beschädigung/Zerstörung des Innenringes wird sehr wirksam vorgebeugt.

### Kurzbeschreibung der Zeichnungen

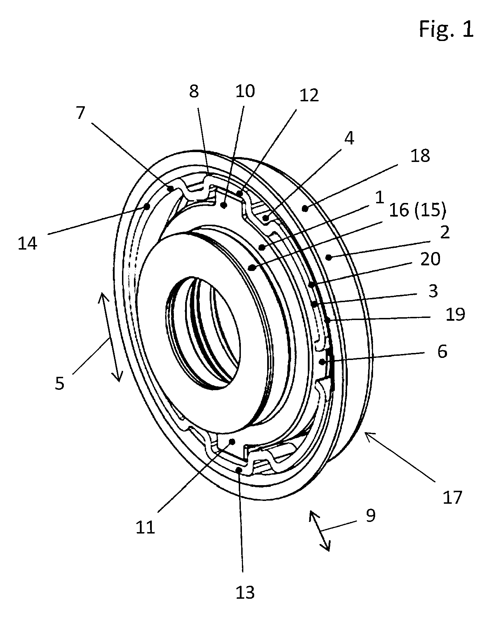

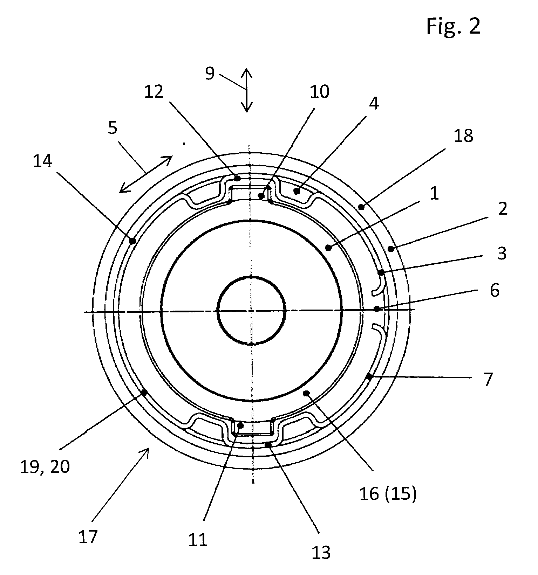

Ein Ausführungsbeispiel der erfindungsgemäßen Anordnung wird nachfolgend anhand der Figuren 1 und 2 näher erläutert.

Diese zeigen jeweils in schematischer Darstellung:
- Figur 1: ein Ausführungsbeispiel der erfindungsgemäßen Anordnung in perspektivischer Darstellung,
- Figur 2: das Ausführungsbeispiel aus Figur 1 in einer Ansicht von links.

### Ausführung der Erfindung

In den Figuren 1 und 2 ist ein Ausführungsbeispiel der erfindungsgemäßen Anordnung zur Übertragung von Drehmoment gezeigt.

Es handelt sich um einen Bestandteil einer Gleitringdichtung 17, wobei der Innenring 1 generell als Gleit- 15 oder Gegenring 16 ausgebildet sein kann. Im hier gezeigten Ausführungsbeispiel ist der Innenring 1 der in axialer Richtung nicht-federnd gelagerte Gegenring 16 der Gleitringdichtung 17.

Der Außenring 2 ist im dargestellten Ausführungsbeispiel das Gehäuse 18 der Gleitringdichtung 17, wobei zwischen dem Gegenring 16 und dem Gehäuse 18 innerhalb des Spalts 4 das Drehmoment-Übertragungselement 3 angeordnet ist.

Der Gegenring 16 umfasst zwei sich in radialer Richtung 9 nach außen erstreckende Vorsprünge 10, 11, die gleichmäßig in Umfangsrichtung 5 verteilt und in radialer Richtung 9 einander gegenüberliegend angeordnet sind.

Das Drehmoment-Übertragungselement 3 hat im Wesentlichen kongruent zu den Vorsprüngen 10, 11 ausgebildete Vertiefungen 12, 13, wobei der Gegenring 16 und das Drehmoment-Übertragungselement 3 durch die in den Vertiefungen 12, 13 formschlüssig angeordneten Vorsprünge 10, 11 drehfest miteinander verbunden sind.

Das Drehmoment-Übertragungselement 3 berührt den Innenumfang des Gehäuses 18 mit radialer Vorspannung reibschlüssig, wobei der Reibschluss durch einander in radialer Richtung 9 zugewandte Reibflächen 19, 20 von Außenring 2 und Drehmoment-Übertragungselement 3 hergestellt ist.

Der Gegenring 16 besteht aus einem keramischen Sinterwerkstoff. Werden Drehmomentspitzen in die erfindungsgemäße Anordnung eingeleitet, wird der Haftschluss der reibschlüssigen Verbindung überwunden und geht in eine Gleitreibung über; das Drehmoment-Übertragungselement 3 und der Außenring 2 verdrehen sich dann relativ zueinander, um den Gegenring 16, insbesondere die Vorsprünge 10, 11 des Gegenrings 16, vor unerwünscht hohen mechanischen Belastungen zu schützen.

Das hier gezeigte Drehmoment-Übertragungselement 3 ist im Wesentlichen hohlzylindrisch ausgebildet und weist einen sich in axialer Richtung erstreckenden Schlitz 6 auf, der sich von einer der Stirnseiten 7 bis zur anderen Stirnseite 8 erstreckt. Das Drehmoment-Übertragungselement 3 besteht aus einem Federstahl und ist unter radialer Vorspannung innerhalb des Spalts 4 angeordnet.

Das maximal übertragbare Drehmoment hängt von der Höhe der radialen Vorspannung ab, mit der das Drehmoment-Übertragungselement 3 innerhalb des Spalts 4 angeordnet ist, insbesondere von der radialen Vorspannung, mit der sich die einander berührenden Reibflächen 19, 20 von Außenring 2 und Drehmoment-Übertragungselement 3 berühren, und von der Oberflächenrauigkeit der Reibflächen 19, 20. Zur Erhöhung des maximal übertragbaren Drehmoments, zum Beispiel dann, wenn die Anordnung in schmierenden Medien zur Anwendung gelangt, können die Reibflächen 19, 20 von Außenring 2 und Drehmoment-Übertragungselement 3 aufgeraut oder zusätzlich mit Reibbelägen 14 versehen sein.

Ein großer Vorteil der erfindungsgemäßen Anordnung ist darin zu sehen, dass der Außenring 2, im hier gezeigten Ausführungsbeispiel das Gehäuse 18 der Gleitringdichtung 17, keinerlei Durchbrechungen aufweist und dadurch dicht ist. Die Übertragung des Drehmoments wird durch das radial vollständig innerhalb des Außenrings 2/ des Gehäuses 18 angeordnete Drehmoment-Übertragungselement 3 bewirkt.

## Patentansprüche

1. Anordnung zur Übertragung von Drehmoment, umfassend einen Innenring (1), einen Außenring (2) und ein Drehmoment-Übertragungselement (3), wobei der Innenring (1) und der Außenring (2) konzentrisch zueinander angeordnet sind, wobei der Außenring (2) den Innenring (1) mit radialem Abstand umschließt und wobei in dem durch den Abstand gebildeten Spalt (4) das Drehmoment-Übertragungselement (3) angeordnet ist, **dadurch gekennzeichnet, dass** das Drehmoment-Übertragungselement (3) mit dem Innenring (1) formschlüssig und in Umfangsrichtung (5) drehfest verbunden ist und den Außenring (2) unter radialer Vorspannung reibschlüssig und anliegend berührt.

2. Anordnung zur Übertragung von Drehmoment, umfassend einen Innenring (1), einen Außenring (2) und ein Drehmoment-Übertragungselement (3), wobei der Innenring (1) und der Außenring (2) konzentrisch zueinander angeordnet sind, wobei der Außenring (2) den Innenring (1) mit radialem Abstand umschließt und wobei in dem durch den Abstand gebildeten Spalt (4) das Drehmoment-Übertragungselement (3) angeordnet ist, **dadurch gekennzeichnet, dass** das Drehmoment-Übertragungselement (3) mit dem Außenring (2) formschlüssig und in Umfangsrichtung (5) drehfest verbunden ist und den Innenring (1) unter radialer Vorspannung reibschlüssig und anliegend berührt.

3. Anordnung nach einem der Ansprüche 1 oder 2, **dadurch gekennzeichnet, dass** das Drehmoment-Übertragungselement (3) im Wesentlichen hohlzylindrisch ausgebildet ist.

4. Anordnung nach einem der Ansprüche 1 bis 3, **dadurch gekennzeichnet, dass** das Drehmoment-Übertragungselement (3) zur Erzeugung der elastischen radialen Vorspannung einen Schlitz (6) in axialer Richtung aufweist, der sich von einer Stirnseite (7) des Drehmoment-Übertragungselements (3) zur anderen Stirnseite (8) erstreckt.

5. Anordnung nach einem der Ansprüche 1 bis 4, **dadurch gekennzeichnet, dass** das Drehmoment-Übertragungselement (3) aus einem metallischen Werkstoff besteht.

6. Anordnung nach einem der Ansprüche 1 bis 5, **dadurch gekennzeichnet, dass** das Drehmoment-Übertragungselement (3) aus einem Federstahl besteht.

7. Anordnung nach einem der Ansprüche 1 bis 6, **dadurch gekennzeichnet, dass** der Innenring (1) oder der Außenring (2) zumindest einen sich in radialer Richtung (9) erstreckenden, rastnasenförmigen Vorsprung (10, 11) aufweist, der drehfest mit zumindest einer kongruent zum Vorsprung (10, 11) ausgebildeten Vertiefung (12, 13) des Drehmoment-Übertragungselements (3) in Eingriff ist.

8. Anordnung nach Anspruch 7, **dadurch gekennzeichnet, dass** zwei Vorsprünge (10, 11) und zwei entsprechende Vertiefungen (12, 13) vorgesehen sind und dass die Vorsprünge (10, 11) und die Vertiefungen (12, 13) gleichmäßig in Umfangsrichtung (5) verteilt angeordnet sind.

9. Anordnung nach einem der Ansprüche 1 bis 8, **dadurch gekennzeichnet, dass** das Drehmoment-Übertragungselement (3) auf seiner dem Außenring (2) oder dem Innenring (1) radial zugewandten und den Außenring (2) oder den Innenring (1) berührenden Seite eine erhöhte Oberflächenrauigkeit aufweist.

10. Anordnung nach einem der Ansprüche 1 bis 9, **dadurch gekennzeichnet, dass** der Außenring (2) oder der Innenring (1) auf seiner dem Drehmoment-Übertragungselement (3) radial zugewandten und das Drehmoment-Übertragung Element (3) berührenden Seite eine erhöhte Oberflächenrauigkeit aufweist.

11. Anordnung nach einem der Ansprüche 9 oder 10, **dadurch gekennzeichnet, dass** die erhöhte Oberflächenrauigkeit durch einen separat erzeugten Reibbelag (14) gebildet ist.

12. Anordnung nach einem der Ansprüche 1 bis 11, **dadurch gekennzeichnet, dass** der Innenring (1) als Gleit- (15) oder Gegenring (16) einer Gleitringdichtung (17) und der Außenring (2) als Gehäuse (18) der Gleitringdichtung (17) ausgebildet ist.

13. Anordnung nach einem der Ansprüche 1 bis 12, **dadurch gekennzeichnet, dass** der Innenring (1) aus einem keramischen Sinterwerkstoff besteht.
